# EUROPEAN PATENT APPLICATION

(11) **EP 1 818 703 A1**
(43) Date of publication of application: **15.08.2007**
(21) Application number: 07002406.2
(22) Date of filing: 05.02.2007
(51) Int. Cl.: G02B 6/44

(54) **Optical fiber cable suited for blown installation or pushing installation in microducts of small diameter**

(30) Priority: 08.02.2006 NL 1031110; 13.06.2006 WO PCT/NL2006/000289
(71) Applicant: Draka Comteq B.V., 1083 HJ Amsterdam (NL)
(72) Inventor: Nothofer, Klaus, 40699 Erkrath (DE); Weiss, Alexander, 41179 Mönchengladbach (DE); Lausch, Peter, 47803 Krefeld (DE)
(74) Representative: op den Brouw-Sprakel, Vera Stefanie Irene

(57) **Abstract**

The invention relates to the field of optical fiber cables and more specifically to an optical fiber cable especially suited for blown installation or pushing installation in microducts of small diameter. A microcable for installation in small microducts comprising an outer sheath as buffer tube holding a plurality of optical fibers without a layer of strength elements stranded around said outer sheath, has an outer sheath made of one single thermoplastic material.

## Description

The invention relates to the field of optical fiber cables and more specifically to an optical fiber cable especially suited for blown installation or pushing installation in microducts of small diameter.

Fiber optic cables have been commonly deployed by installing them in ducts either by blowing or pulling, burying them in the ground, or suspending them between above-ground poles. Traditional duct Installation is inefficient in utilizing space tough, typically one cable per inner duct has been the maximum capacity, and in some cases two cables have been pulled- or jetted-in. Recently developed optical micro cabling technology has been introduced for the deployment of fiber optic cables to increase utilization of the conduit space and enhance profitability of the current or future telecommunications Infrastructure. This technology involves the use of standard inner ducts in which microducts are jetted, then followed by the jetting of microduct cables or microcables into the microducts when required. Although originally intended for business access networks (FTTB) and fiber-to-the-home (FTTH), it has been used successfully in long-haul applications as well.

Microducts are empty tubes of small outer/inner diameter, generally in the range of 5/3.5 mm - 12/10 mm which can be blown or pushed into empty or partially filled standard ducts. Microduct cables or microcables, specially designed for this kind of applications are then installed, when and as needed, inside said microduct tubes by means of blown installation techniques.

There are a variety of microduct cables on the market with variable external diameters suited for different microduct inner diameter dimensions and holding a plurality of optical fibers inside. In US Pat. 2002/006231, for example, a microcable comprising a metal or plastic tube of very small diameter (preferably 3.5 to 5.5 mm) coated with a plastic layer e.g. PTFE, is described. The optical waveguides are then introduced into the tube either after the empty tube has been laid or at the factory.

EP 1 469 329 relates to a cable for use in an air blowing installation comprising:
at least one transmission medium of electrical or optical signals; and
a hollow cylindrical tube containing the transmission medium therein, the tube being formed at a surface thereof with a plurality of recesses having a crater shape.

GB 2 215 480 relates to a cable element comprises a plurality of primary coated optical fibres fixed in a juxtaposed configuration of a central fibre surrounded by the remaining fibres; the assembly being encapsulated in a plastics sheath.

EP-A-1 420 279 relates to a fiber optic cable with optical fibers stranded around a central strength member, and surrounded by outer jacket made of a low coefficient of friction material having a textured surface.

EP-A-1 369 724 relates to an optical fiber cable structure including a tube comprised of inorganic fillers dispersed within a soft resin, the tube housing optical fibers or ribbons surrounded by a water blocking material. The use of the inorganic fillers in the soft resin reduces the thermal expansion/contraction of the cable structure, and increases the compression resistance of the cable structure to axial loads, providing protection to the optical fibers.

International application WO 2005/019894 relates to a cable suitable for push/pull installation in a microtube comprising an outer sheath which surrounds at least one optical fiber. The aforementioned outer sheath is made from a material blend of multiple thermoplastics having a modulus of elasticity of between 1000 and 2500 Mpa under normal use conditions, a thermal expansion coefficient of less than 1.10⁴/°C and a post shrinkage coefficient of less than 0.1%.

US no. 6,137,935 relates to an optical cable comprising at least one optical fiber surrounded by a tubular sheath, wherein an inner layer and an outer layer of the tubular sheath are extruded together around the optical fiber in a single operating step. The tubular sheath is formed by an inner layer made of plastic, followed by a directly superimposed outer layer which is also made of plastic; both layers are extruded in a common operating step. Tension elements which extend in the longitudinal direction of the optical cable, are embedded in the tubular sheath in the region between the inner layer and the outer layer.

US no. 6,334,015 relates to a telecommunication cable having optical fibers contained in a retaining sheath, wherein the retaining sheath tightly grips a predetermined number N of optical fibers, for example four, six, eight or twelve fibers to hold the optical fibers in a group and thereby constitute a compact module. A plurality of optical fiber modules can be combined within a protective jacket of a telecommunication cable, or can be retained in a cylindrical sheath to form a bundle of several modules, with or without a central reinforcing member, which bundle is combined with other bundles of modules in a protective jacket of a telecommunication cable, which cable Is not be regarded as microcable.

The object of the present invention is to develop a microcable suitable for push/blown installation in small microducts.

Another object of the present invention is to develop a jacket material for a microcable that offers a low friction and sufficient stiffness and at the same time a limited post-extrusion shrinkage. The cable shall allow high fiber count, blowing performance and be mechanically robust enough to be safely installed in an outerside plant environment.

These objects are achieved according to the invention by a microcable for installation in small microducts comprising an outer sheath as buffer tube holding a plurality of optical fibers, without a layer of strength elements stranded around said outer sheath, characterised in that, said outer sheath is made of one single thermoplastic material.

Advantageous configurations of the invention emerge from the dependent claims, the following description and the drawings.

A cable of the characteristics described in the present invention also complies with all major outdoor cable requirements: not sensitive to mechanical damage, high tensile strength, crush resistance and able to word in an operation temperature range from -30 °C to +60 °C. Another advantage is that it is easy to handle by normal skilled installation personnel. The nominal diameter of the optical fibers is within a range of 200-250 µm.

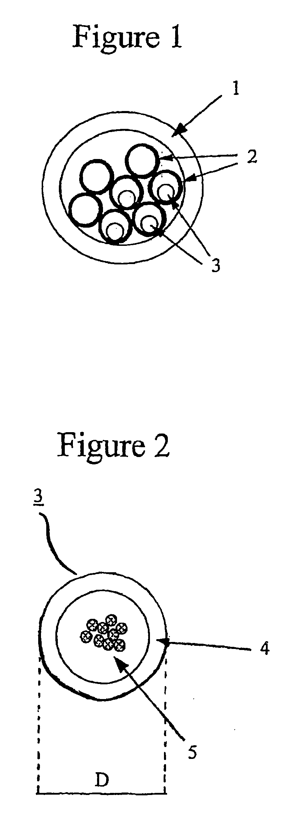

An embodiment of the invention is now explained with the aid of Figures 1 and 2.

Fig. 1 shows a cross-sectional view of an optical micro cabling deployment example.

Fig. 2 shows a cross-sectional view of a microcable according to the invention.

Figure 1 shows an example of the micro cabling technology for the deployment of optical fiber cables. The configuration in the figure shows a duct 1 in which seven microducts 2 have been placed and four of said microducts 2 have a microcable 3 inside.

Figure 2 shows a mlcrocable 3 according to the invention. It comprises a single buffer tube 4 holding a plurality of optical fibers 5, wherein said buffer tube 4 functions as an outer sheath. The outer sheath 4 shall be smooth, free of recesses and not structured.

The outer sheath 4 of the mlcrocable 3 is made of thermoplastic material, e.g. polyamide. Another suitable material for outer sheath 4 is polycarbonate (PC) or polybutylene terephtalate (PBT).

The buffer tube 4 is made of one single thermoplastic material, i.e. not a mixture of thermoplastic materials, and the area surrounding the optical fibers (5) In said buffer tube 4 is generally filled with a water repelling gel.

For example, for a microcable 3 having 24 optical fibers inside, the outer diameter D can be 3,0 mm, while a cable of the same outer diameter with separate tube and sheath only can take 12 fibers. Or a cable with 24 fibers but with separate sheaths and strength elements has a diameter of 3,8 mm. This means that the microcable according to the present invention can hold about 70 % to 100 % more fibers in the same outer diameter. The fibers do not have a fixed position within buffer tube 4, nor to each other.

The optical fibers 5 used are preferably standard singlemode or multimode optical fibers with a nominal diameter of 200-250 pm. The optical fibers 5 have a relative length difference of less than 0.03 % to each other, the optical fibers 5 generally extending in a longitudinal direction but having no fixed position relative to the tubes inner surface.

A microcable 3 designed according to the invention presents the advantages that it allows to obtain a cable with an extremely small outer diameter D specially suited for installation in small microducts 2, and is flexible enough to be easily blown in microducts in outside cable plants. It further allows operation at low temperatures and provides high protection of the fibers against mechanical damage, microbending and water. There are no strength elements located in the outer sheath 4.

The jacket material or the material as the outer sheath is to be made from one single thermoplastic material having a Young's modulus between 1300 N/mm² and 3000 N/mm², The post extrusion shrinkage shall be between 0.1 % and 1 %. The post extrusion shrinkage is measured on a cable sample, after 50 cycles -20 °C / 70°C. The thermal elongation coefficient shall be preferably In the range of 1-2 x 10⁻⁴/K. The viscosity number shall be > 160, preferably > 190, measured according to ISO 307. The moisture uptake shall be preferably max 1.8 % according to ISO 62, temperature 23 °C saturation. An example of such a thermoplastic material is polyamide 12 grade.

The microcable according to the present invention can be applied for a customer building connections and has preferably a fiber count of equal or less than 24, at a diameter range between 1.5 mm and 3.2 mm. The cable thickness, defined by the ratio between outer and inner diameter of the outer sheath is in the range of 1.5-2.0. The fiber density, i.e. the cross-section of fibers in the cable divided by the cross-section of the cable, of the cable is preferably in a range between 0.1 and 0.2. A fiber density higher than 0.2 limits the operation temperature range. The microcable according to the present invention provides a low post shrinkage and is at the same time easy to handle and cheap to produce.

By selecting the specific type of jacket material, i.e. one single thermoplastic material, a mixture of thermoplastic materials is avoided. The thermoplastic material may contain additives like UV stabilisers, color components, pigments and ageing stabilisers. The thermoplastic material preferably does not contain any inorganic fillers, except the group of the aforementioned additives. Therefore, the main advantage of the present microcable is a simple cable design by applying an outer sheath made of one single thermoplastic material, as well as a width application window, i.e. pushing installation, blowing installation, indoor and outdoor application. The microcable according the present invention is manufactured by extrusion, wherein no specific measures are taken to modify the outer surface of the sheath, i.e. a step of roughening or smoothing.

## Claims

1. A microcable (3) for installation in small microducts (2) comprising an outer sheath (4) as buffer tube holding a plurality of optical fibers (5), without a layer of strength elements stranded around said outer sheath (4), **characterised in that** said outer sheath (4) is made of one single thermoplastic material.

2. The microcable (3) of claim 1, **characterised in that** said single thermoplastic material has a Young's modulus in the range of 1300-3000 N/mm², a post extrusion shrinkage in the range of 0.1-1%, and a thermal elongation coefficient in the range of 1-2 x 10⁻⁴/K.

3. The microcable (3) according to claims 1-2, **characterised in that** said single thermoplastic material has a viscosity number of > 160, preferably of > 190.

4. The microcable (3) according to anyone of the preceding claims **characterised in that**, said outer sheath (4) has a moisture uptake of < 1.8 %, according to ISO 62 (at a temperature of 23 °C saturation).

5. The microcable (3) according to anyone of the preceding claims, **characterised in that**, said single thermoplastic material is resistant to UV radiation.

6. The microcable (3) according to anyone of the preceding claims, **characterised in that**, said single thermoplastic material is resistant to ageing.

7. The microcable (3) according to anyone of the preceding claims, **characterised in that**, said single thermoplastic material is polyamide 12.

8. The microcable (3) according to anyone of the preceding claims, **characterised in that**, the fiber density Is In the range of 0.1 - 0.2.

9. The microcable (3) according to anyone of the preceding claims, **characterised in that** the fiber count is ≤ 24, at an outer diameter of said microcable (3) between 1.5 and 3.2 mm.

10. The microcable (3) according to anyone of the preceding claims, **characterised in that** the area surrounding the optical fiber(s) (5) in said buffer tube (4) is filled with a water repelling gel.

11. The microcable (3) according to anyone of the preceding claims, **characterised in that** the wall thickness, defined by the ratio between outer and inner diameter of the outer sheath (4), is in the range of 1.5 to 2.0.

12. A method for the installation of a microcable (3) in a microduct according to anyone of the preceding claims, **characterised in that** said microcable (3) is introduced by pushing and/or air blowing.
